# EUROPÄISCHE PATENTANMELDUNG

(11) **EP 2 786 892 A1**
(43) Veröffentlichungstag der Anmeldung: **08.10.2014**
(21) Anmeldenummer: 14160801.8
(22) Anmeldetag: 20.03.2014
(51) Int. Cl.: B60N 2/02, B60N 2/24, B60N 2/22, B60N 2/62

(54) **Verstellbarer Fahrzeugsitz**

(30) Priorität: 02.04.2013 DE 102013205784
(71) Anmelder: Siemens Aktiengesellschaft, 80333 München (DE)
(72) Erfinder: Kammler, Michael, 47906 Kempen (DE)

(57) **Zusammenfassung**

Die Erfindung bezieht sich u. a. auf einen verstellbaren Fahrzeugsitz (10), insbesondere Schienenfahrzeugsitz, mit einem Sitzabschnitt (30) und einem Rückenlehnenabschnitt (20).

Erfindungsgemäß ist vorgesehen, dass der Fahrzeugsitz (10) eine einteilige Schale (100) aufweist, die lokal unterschiedlich steif ist und durch Deformation unterschiedliche Konturen annehmen kann.

## Beschreibung

Die Erfindung bezieht sich auf einen verstellbaren Fahrzeugsitz, insbesondere einen verstellbaren Schienenfahrzeugsitz, mit einem Sitzabschnitt und einem Rückenlehnenabschnitt.

Im Bereich der Schienenfahrzeugtechnik sind sogenannte Schlepprückensitze bekannt, die eine Normalstellung und darüber hinaus eine Ruhestellung ermöglichen. Um einen Schlepprückensitz von der Normalstellung in die Ruhestellung zu bringen, wird der Sitzabschnitt des Fahrzeugsitzes von dem Passagier nach vorne geschoben, wodurch ein Absenken und gleichzeitig ein Verkippen des Rückenlehnenabschnitts hervorgerufen wird. Die Rückstellung von der Ruhestellung in die Normalstellung erfolgt entsprechend umgekehrt, indem der Sitzabschnitt nach hinten geschoben wird, wodurch ein Hochschieben und Zurückkippen des Rückenlehnenabschnitts initiiert wird.

Der Erfindung liegt die Aufgabe zugrunde, einen verstellbaren Fahrzeugsitz, insbesondere für den Einsatz im Eisenbahnbereich, anzugeben, der einen höheren Sitzkomfort bzw. bessere orthopädische Eigenschaften als vorbekannte Fahrzeugsitze, insbesondere bessere Eigenschaften als der oben beschriebene vorbekannte Schlepprückensitz, bietet.

Diese Aufgabe wird erfindungsgemäß durch einen verstellbaren Fahrzeugsitz mit den Merkmalen gemäß Patentanspruch 1 gelöst. Vorteilhafte Ausgestaltungen des erfindungsgemäßen Fahrzeugsitzes sind in Unteransprüchen angegeben.

Danach ist erfindungsgemäß vorgesehen, dass der Fahrzeugsitz eine einteilige Schale aufweist, die lokal unterschiedlich steif ist und durch Deformation unterschiedliche Konturen annehmen kann.

Ein wesentlicher Vorteil des erfindungsgemäßen Fahrzeugsitzes besteht darin, dass dieser aufgrund der lokal unterschiedlichen Steifheit der Schale bzw. aufgrund der lokalen Deformierbarkeit der Schale eine besonders gleichmäßige bzw. stetige Verformung ohne Spalten und Kanten gewährleistet und damit eine optimale Anpassung an eine aus orthopädischer Sicht optimale Sitzkontur auch in unterschiedlichen Stellpositionen des Fahrzeugsitzes ermöglicht. So ist beispielsweise eine optimale Konturanpassung sowohl für die oben genannte Normalstellung als auch die oben genannte Ruhestellung möglich.

Ein weiterer wesentlicher Vorteil des erfindungsgemäßen Fahrzeugsitzes besteht darin, dass die bereits erwähnte optimale Konturanpassung ohne zusätzliche Gelenke oder Linearführungen erreicht werden kann, so dass zusätzliche Kosten und zusätzliches Gewicht vermieden werden können. Auch lässt sich eine Vergrößerung des Bauraumes insbesondere im Lehnenbereich des Fahrzeugsitzes aufgrund der Einteiligkeit der Schale trotz sehr großer Variabilität der Sitzkontur vermeiden.

Ein dritter wesentlicher Vorteil des erfindungsgemäßen Fahrzeugsitzes ist darin zu sehen, dass aufgrund der Einteiligkeit der Schale mechanische Übergangsstellen zwischen starren Sitzabschnitten vermieden werden können. Komfortprobleme durch Druckstellen, Haltbarkeitsprobleme des darauf befindlichen Polstermaterials oder Falten im Sitzbezugsstoff können entfallen oder zumindest reduziert werden.

Mit Blick auf eine optimale Verstellbarkeit des Fahrzeugsitzes wird es als vorteilhaft angesehen, wenn die einteilige Schale zumindest den Rückenlehnenabschnitt des Fahrzeugsitzes bildet. Besonders vorteilhaft ist es, wenn die einteilige Schale sowohl den Rückenlehnenabschnitt als auch den Sitzabschnitt des Fahrzeugsitzes bildet.

Mit Blick auf die Vermeidung von Übergangsstellen sowie mit Blick auf die Erhöhung der Lebensdauer des Polstermaterials wird es als vorteilhaft angesehen, wenn die einteilige Schale vollständig gelenkfrei ist. Unter dem Begriff "Gelenk" wird eine bewegliche Verbindung zwischen zwei getrennten Bauteilen verstanden.

Um eine optimale Sitzkontur sowohl in einer Normalstellung als auch in einer Ruhestellung zu erreichen, wird es als vorteilhaft angesehen, wenn die Schale zumindest zwei Teilabschnitte aufweist, die durch einen dazwischen liegenden, weniger steifen oder andersartig steifen Teilabschnitt voneinander getrennt sind.

Vorzugsweise weist die Schale zumindest fünf Teilabschnitte auf, von denen zwei weniger oder andersartig steif sind als die drei anderen Teilabschnitte. Die zwei weniger steifen oder andersartig steifen Teilabschnitte trennen vorzugsweise jeweils zwei der drei anderen Teilabschnitte voneinander.

Da eine Konturanpassung gerade im Rückenlehnenabschnitt besonders vorteilhaft ist, wird es als vorteilhaft angesehen, wenn die zwei weniger steifen oder andersartig steifen Teilabschnitte zu dem Rückenabschnitt der Schale gehören.

Mit Blick auf eine ausreichende Stabilität und Haltbarkeit der einteiligen Schale wird es als vorteilhaft angesehen, wenn diese aus einem Stahlblech, insbesondere einem tiefgezogenen Stahlblech, besteht. Alternativ kann die Schale auch aus faserverstärktem, insbesondere glasfaserverstärktem, Kunststoff bestehen.

Um die bereits erläuterte lokale Steifigkeitsverteilung besonders einfach hervorrufen zu können, wird es als vorteilhaft angesehen, wenn diese zumindest auch auf einer lokalen Verringerung der Steifigkeit durch Löcher oder Aussparungen in der Schale beruht.

Alternativ oder zusätzlich kann vorgesehen sein, dass die Steifigkeitsverteilung in der Schale zumindest auch auf Sicken beruht. Vorzugsweise verlaufen einige der Sicken senkrecht zu anderen Sicken. Besonders bevorzugt gibt es in Längsrichtung (der Rückenlehne gesehen) verlaufende Sicken für Bereiche mit hoher Längs- und niedriger Quersteifigkeit der Schale sowie in Querrichtung verlaufende Sicken für Bereiche hoher Quer- und niedriger Längssteifigkeit der Schale.

Ist die einteilige Schale mit Löchern, Aussparungen und/oder Sicken versehen, so wird es als vorteilhaft angesehen, wenn ein auf der Schale befindlicher Bezug oder Polster durch die Löcher, Aussparungen und/oder Sicken belüftet werden.

Darüber hinaus ist es möglich, dass die Steifigkeitsverteilung in der Schale zumindest auch auf lokal unterschiedlichen Materialeigenschaften beruht. Im Falle lokal unterschiedlicher Materialeigenschaften wird es als vorteilhaft angesehen, wenn die Schale aus einem Faserverbundwerkstoff besteht, bei dem die Faserorientierung des Faserverbundwerkstoffs oder der Faservolumenanteil des Faserverbundwerkstoffs lokal unterschiedlich ist und zu der lokalen Steifigkeitsverteilung in der Schale führt.

Um eine einfache Verstellbarkeit des Fahrzeugsitzes, insbesondere von einer Normalstellung in eine Ruhestellung oder umgekehrt von der Ruhestellung in der Normalstellung zu ermöglichen, wird es als vorteilhaft angesehen, wenn der Fahrzeugsitz eine mit der Schale mechanisch verbundene Sitzverstelleinrichtung aufweist, die bei einer Betätigung die Schale deformiert. Vorzugsweise umfasst eine solche Verstelleinrichtung mindestens zwei Linear-Führungspaare und/oder zumindest einen Hebel.

Bezüglich der Ausgestaltung der Verstelleinrichtung wird es als vorteilhaft angesehen, wenn diese im Falle einer Betätigung eine Verstellung der Neigung und/oder Kontur und/oder Position des Sitzabschnitts sowie eine Verstellung der Neigung und/oder Kontur des Rückenlehnenabschnitts hervorruft.

Die Erfindung bezieht sich darüber hinaus auf ein Schienenfahrzeug, das mit einem Schienenfahrzeugsitz ausgestattet ist. Erfindungsgemäß ist bezüglich eines solchen Schienenfahrzeugs vorgesehen, dass dieses im Passagierbereich zumindest einen Fahrzeugsitz aufweist, wie er oben beschrieben worden ist.

Bezüglich der Vorteile des erfindungsgemäßen Schienenfahrzeugs sei auf die obigen Ausführungen im Zusammenhang mit dem erfindungsgemäßen Fahrzeugsitz verwiesen, da die Vorteile des Fahrzeugsitzes denen des Schienenfahrzeugs entsprechen.

Die Erfindung bezieht sich darüber hinaus auf ein Verfahren zum Herstellen eines Fahrzeugsitzes, insbesondere Schienenfahrzeugsitzes, mit einem Sitzabschnitt und einem Rückenlehnenabschnitt.

Bezüglich eines solchen Verfahrens ist erfindungsgemäß vorgesehen, dass der Sitzabschnitt und/oder der Rückenlehnenabschnitt des Fahrzeugsitzes durch eine einteilige Schale gebildet werden, die lokal unterschiedlich steif ist und durch Deformation unterschiedliche Konturen annehmen kann.

Bezüglich der Vorteile des erfindungsgemäßen Verfahrens sei auf die obigen Ausführungen verwiesen, die für das Verfahren entsprechend gelten.

Als besonders vorteilhaft wird es angesehen, wenn eine vorgegebene Steifigkeitsverteilung in der Schale durch zumindest eine der folgenden Schritte erzeugt wird:
- Einbringen von Löchern oder Aussparungen in der Schale zur lokalen Verringerung der Steifigkeit,
- Einstellen lokal unterschiedlicher Faserorientierung und/oder Einstellen eines lokal unterschiedlichen Faservolumenanteils im Falle eines Faserverbundwerkstoffes der Schale,
- Einbringen von Sicken in der Schale.

Die Erfindung wird nachfolgend anhand von Ausführungsbeispielen näher erläutert; dabei zeigen beispielhaft
- Figur 1: zur allgemeinen Erläuterung ein Ausführungsbeispiel für einen Schlepprückensitz mit starren Abschnitten, die über ein Gelenk miteinander verbunden sind,
- Figur 2: den Schlepprückensitz gemäß Figur 1 in einer Ruhestellung,
- Figur 3: ein erstes Ausführungsbeispiel für einen erfindungsgemäßen Fahrzeugsitz mit einteiliger Schale in der Normalstellung,
- Figur 4: den Fahrzeugsitz gemäß Figur 3 in der Ruhestellung,
- Figur 5: die einteilige Schale des Fahrzeugsitzes gemäß den Figuren 3 und 4 näher im Detail,
- Figuren 6-7: Querschnitte durch die einteilige Schale gemäß Figur 5,
- Figur 8: ein zweites Ausführungsbeispiel für einen erfindungsgemäßen Fahrzeugsitz mit einer einteiligen Schale, wobei der Fahrzeugsitz mit einer Verstelleinrichtung mit Hebel ausgestattet ist,
- Figur 9: den Fahrzeugsitz gemäß Figur 8 in der Ruhestellung,
- Figur 10: ein drittes Ausführungsbeispiel für einen erfindungsgemäßen Fahrzeugsitz mit einer einteiligen Schale, wobei eine Verstelleinrichtung zwei Hebel aufweist,
- Figur 11: den Fahrzeugsitz gemäß Figur 10 in der Ruhestellung,
- Figur 12: ein viertes Ausführungsbeispiel für einen erfindungsgemäßen Fahrzeugsitz mit einteiliger Schale, wobei eine Verstelleinrichtung zwei federbelastete Hebel aufweist,
- Figur 13: den Fahrzeugsitz gemäß Figur 12 in der Ruhestellung und
- Figur 14: die einteilige Schale gemäß Figur 5, nachdem diese mit einem Sitzpolster versehen worden ist.

In den Figuren werden der Übersicht halber für vergleichbare oder identische Komponenten stets dieselben Bezugszeichen verwendet.

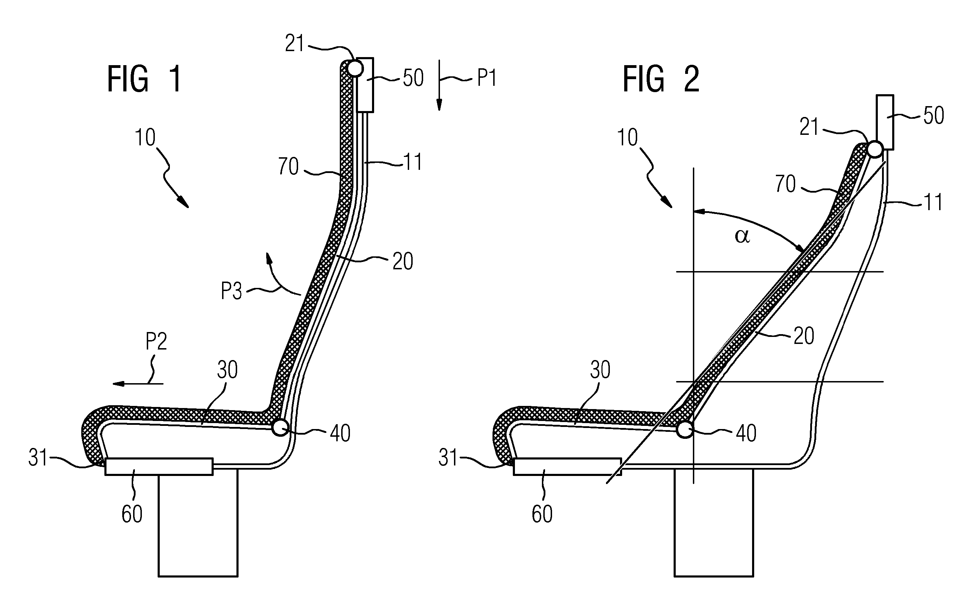

Die Figur 1 zeigt einen verstellbaren Fahrzeugsitz 10, der einen starren Rückenlehnenabschnitt 20 sowie einen starren Sitzabschnitt 30 aufweist. Der starre Rückenlehnenabschnitt 20 und der starre Sitzabschnitt 30 sind über ein Gelenk 40 miteinander verbunden.

An seinem dem Gelenk 40 entfernten Ende 21 steht der Rückenlehnenabschnitt 20 mit einer Längsführung 50 in Verbindung, die ein Verschieben des Rückenlehnenabschnitts 20 in vertikaler Richtung entlang der Pfeilrichtung P1 ermöglicht.

Die Figur 1 zeigt darüber hinaus eine weitere Längsführung 60, die mit dem dem Gelenk 40 entfernten Ende 31 des Sitzabschnitts 30 in Verbindung steht. Die Längsführung 60 ermöglicht ein horizontales Verschieben des Sitzabschnitts 30 entlang der Pfeilrichtung P2.

Soll der Fahrzeugsitz 10 von der in der Figur 1 gezeigten Normalstellung in eine Ruhestellung verstellt werden, so wird hierzu der Sitzabschnitt 30 von einer auf dem Fahrzeugsitz 10 befindlichen Person - z. B durch Abstützen der Fersen auf dem Fußboden - entlang der Pfeilrichtung P2 über die Längsführung 60 nach vorn geschoben. Aufgrund der gelenkigen Verbindung zwischen dem Sitzabschnitt 30 und dem Rückenlehnenabschnitt 20, also durch Vermittlung des Gelenks 40, wird bei dem Nachvorneschieben des Sitzabschnitts 30 ein Absenken des Rückenlehnenabschnitts 20 über die Längsführung 50 entlang der Pfeilrichtung P1 ausgelöst, wobei der Rückenlehnenabschnitt 20 entlang der Pfeilrichtung P3 verkippt wird.

Die Figur 2 zeigt die Ruhestellung des Fahrzeugsitzes 10 gemäß Figur 1 näher im Detail. Man erkennt, dass der Rückenlehnenabschnitt 20 über die Längsführung 50 nach unten geschoben wurde und dadurch von einer ortsfesten Rückwand 11 des Fahrzeugsitzes 10 weggeschwenkt wurde. Der resultierende Verstellwinkel des Rückenlehnenabschnitts 20 ist in der Figur 2 mit dem Bezugszeichen α gekennzeichnet.

Zusammengefasst wird bei dem Fahrzeugsitz 10 gemäß den Figuren 1 und 2 eine Verstellbarkeit von der Normalstellung in die Ruhestellung und umgekehrt von der Ruhestellung in die Normalstellung ermöglicht, weil der starre Sitzabschnitt 30 und der starre Rückenlehnenabschnitt 20 über das Gelenk 40 miteinander verbunden sind.

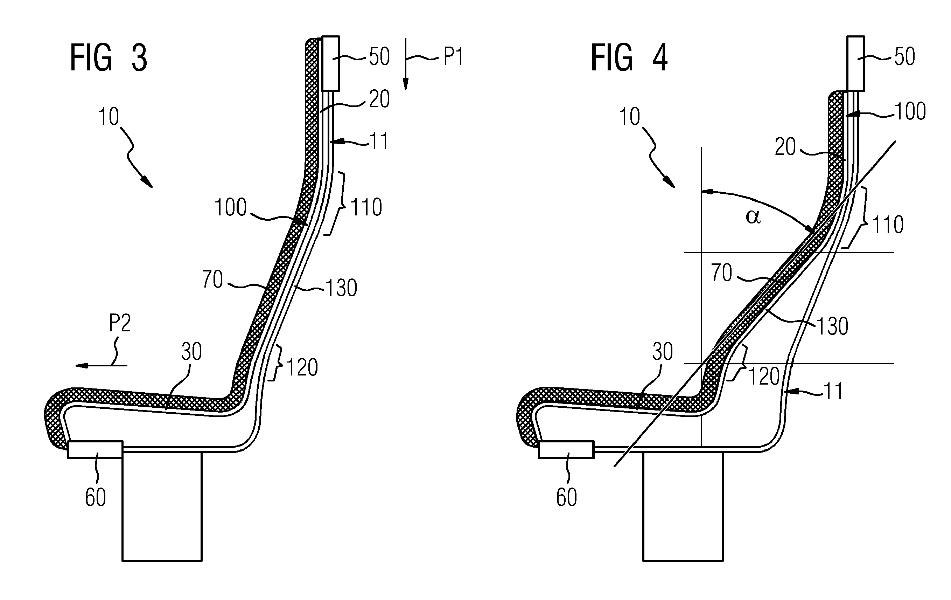

Die Figur 3 zeigt ein Ausführungsbeispiel für einen verstellbaren Fahrzeugsitz 10, der mit einer einteiligen und gelenkfreien Schale 100 ausgestattet ist. Die Schale 100 ist zwischen einem Polster 70 und einer Rückwand 11 des Fahrzeugsitzes 10 angeordnet. Die einteilige Schale 100 bildet sowohl einen Rückenlehnenabschnitt 20 als auch einen Sitzabschnitt 30 des Fahrzeugsitzes 10.

Um eine Verstellbarkeit des Fahrzeugsitzes 10 von der in der Figur 3 dargestellten Normalstellung in eine Ruhestellung zu ermöglichen, wird die einteilige Schale 100 an seinen Schalenenden jeweils mit einer Längsführung 50 und 60 geführt.

Die Längsführung 60 ermöglicht ein horizontales Verschieben des Sitzabschnitts 30 entlang der Pfeilrichtung P2, und die Längsführung 50 ermöglicht ein vertikales Absenken des Rückenlehnenabschnitts 20 entlang der Pfeilrichtung P1.

Da die einteilige Schale 100 gelenkfrei ausgeführt ist, sind für den Übergang von der Normalstellung in die Ruhestellung in der einteiligen Schale 100 zwei deformierbare Teilabschnitte 110 und 120 vorgesehen, die voneinander durch einen dazwischen liegenden Teilabschnitt 130 getrennt sind. Die beiden deformierbaren Teilabschnitte 110 und 120 ermöglichen eine Konturänderung der einteiligen Schale 100 und damit eine Konturänderung des Fahrzeugsitzes 10, sobald der Fahrzeugsitz 10 von der Normalstellung in die Ruhestellung gebracht wird. Dies ist in der Figur 4 näher dargestellt.

Die Figur 4 zeigt den Fahrzeugsitz 10 gemäß Figur 3 nach einer Überführung von der Normalstellung in die Ruhestellung. Man erkennt, dass der Sitzabschnitt 30 in der Längsführung 60 nach vorne geschoben worden ist und ein Absenken des Rückenlehnenabschnitts 20 über die Längsführung 50 erfolgt ist.

Im Rahmen der Überführung des Fahrzeugsitzes 10 von der Normalstellung in die Ruhestellung ist auch eine Deformation der einteiligen Schale 100 erfolgt, und zwar über die deformierbaren Teilabschnitte 110 und 120. Es lässt sich erkennen, dass die beiden deformierbaren Teilabschnitte 110 und 120 ein Verschwenken des dazwischen liegenden Teilabschnitts 130 entlang der Pfeilrichtung P3 ermöglicht haben, wodurch der dazwischen liegende Teilabschnitt 130, der deformierbare Teilabschnitt 120 und auch der Sitzabschnitt 30 von der Rückwand 11 getrennt worden sind.

Zusammengefasst wird ein Übergang von der Normalstellung in die Ruhestellung bei dem Ausführungsbeispiel gemäß den Figuren 3 und 4 sowie eine Konturanpassung der Sitzkontur des Fahrzeugsitzes 10 über die Deformierbarkeit der einteiligen Schale 100 gewährleistet, deren deformierbare Teilabschnitte 110 und 120 u. a. ein Wegklappen des dazwischen liegenden Teilabschnitts 130 von der Rückwand 11 ermöglichen.

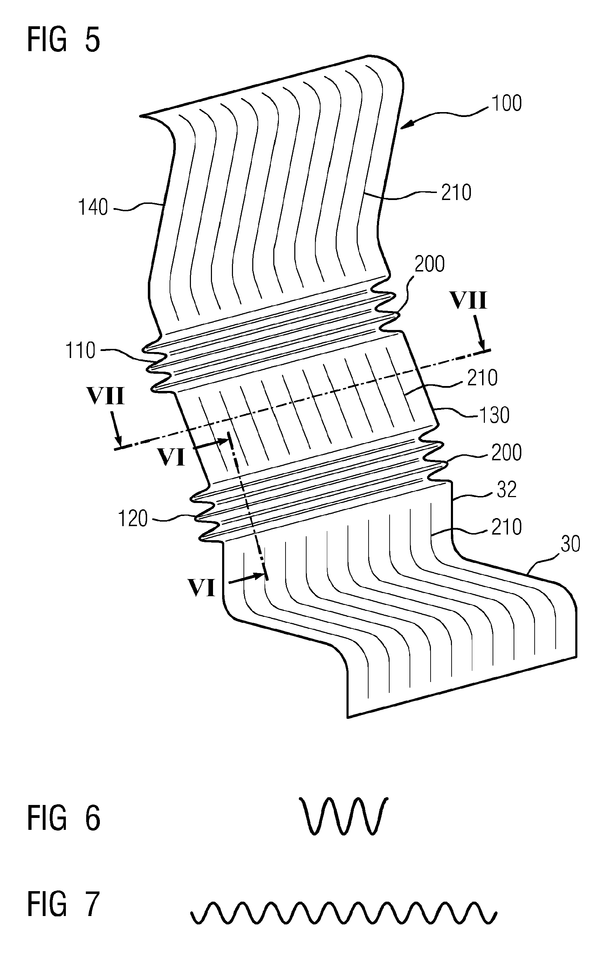

Die Figur 5 zeigt die einteilige Schale 100 des Fahrzeugsitzes 10 gemäß den Figuren 3 und 4 näher im Detail. Man erkennt die beiden deformierbaren Teilabschnitte 110 und 120, deren Deformierbarkeit nur oder zumindest auch auf horizontal verlaufenden Sicken 200 beruht. Die Sicken 200 reduzieren die Steifheit der beiden deformierbaren Teilabschnitte 110 und 120 in Längsrichtung des Rückenlehnenabschnitts 20 und führen zu der beschriebenen Deformierbarkeit. Der Verlauf der Sicken 200 in den beiden deformierbaren Teilabschnitten 110 und 120 ist beispielhaft in der Figur 6 im Querschnitt näher gezeigt.

Die beiden deformierbaren Teilabschnitte 110 und 120 trennen den dazwischen liegenden Teilabschnitt 130 von einem oberen Teilabschnitt 140 sowie dem Sitzabschnitt 30. Der obere Teilabschnitt 140, der dazwischen liegende Teilabschnitt 130 sowie der Sitzabschnitt 30 sind anders steif als die beiden deformierbaren Teilabschnitte 110 und 120, nämlich steifer in der beschriebenen Längsrichtung. Die größere Steifheit bzw. die andersartige Steifheit in Längsrichtung beruht auf der Anordnung von Sicken 210, die senkrecht zu den Sicken 200 und im Bereich des oberen Teilabschnitts 140, des dazwischen liegenden Teilabschnitts 130 sowie des oberen Teilabschnitts 32 des Sitzabschnitts 30 vertikal verlaufen. Die Sicken 210 sind im Querschnitt beispielhaft in der Figur 7 gezeigt.

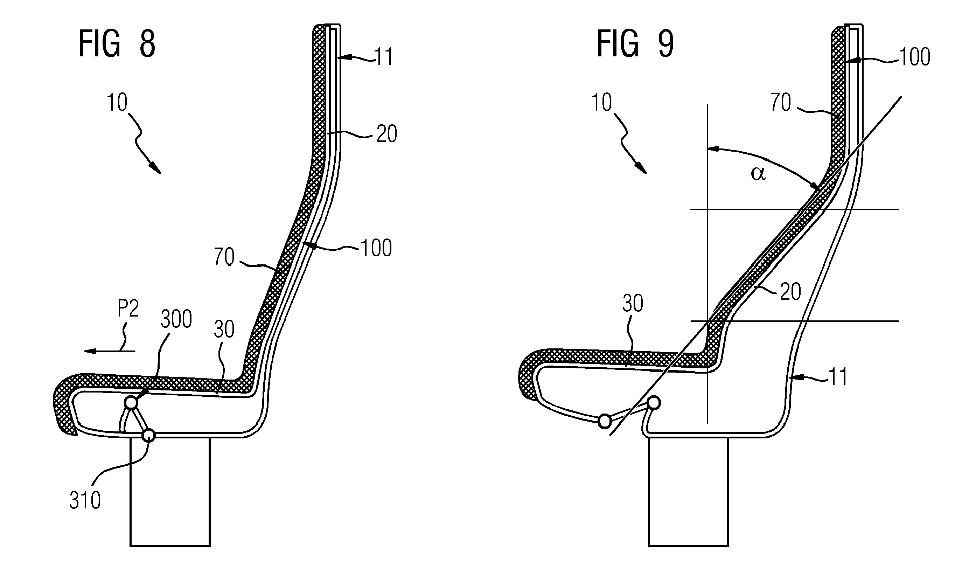

Die Figur 8 zeigt ein weiteres Ausführungsbeispiel für einen verstellbaren Fahrzeugsitz 10, der mit einer einteiligen Schale 100 ausgestattet ist. Die einteilige Schale 100 kann beispielsweise der einteiligen Schale 100 des Fahrzeugsitzes 10 gemäß den Figuren 3 bis 7 entsprechen.

Im Unterschied zu dem Ausführungsbeispiel gemäß den Figuren 3 bis 7 ist bei dem Fahrzeugsitz 10 gemäß Figur 8 zusätzlich eine Verstelleinrichtung 300 mit einem Hebel 310 vorgesehen.

Der Hebel 310 ermöglicht ein Bewegen des Sitzabschnitts 30 entlang der Pfeilrichtung P2 nach vorne, wodurch ein Übergang von der in der Figur 8 gezeigten Normalstellung in die Ruhestellung erfolgen kann. Sobald nämlich der Sitzabschnitt 30 entlang der Pfeilrichtung P2 nach vorne geschoben wird, wird damit einhergehend aufgrund der Deformierbarkeit der einteiligen Sitzschale 100 auch eine Verformung des Rückenlehnenabschnitts 20 erfolgen, wie dies bereits beispielhaft im Zusammenhang mit den Figuren 3 bis 7 erläutert worden ist.

Die Figur 9 zeigt beispielhaft den Fahrzeugsitz 10 gemäß Figur 8, nachdem dieser seine Ruhestellung erreicht hat. Man erkennt, dass durch das Verstellen des Hebels 310 der Verstelleinrichtung 300 eine Deformation der einteiligen Sitzschale 100, insbesondere eine Deformation des Rückenlehnenabschnitts 20, erfolgt ist. Bezüglich der Deformierbarkeit der einteiligen Schale 100 sei auf die obigen Ausführungen verwiesen.

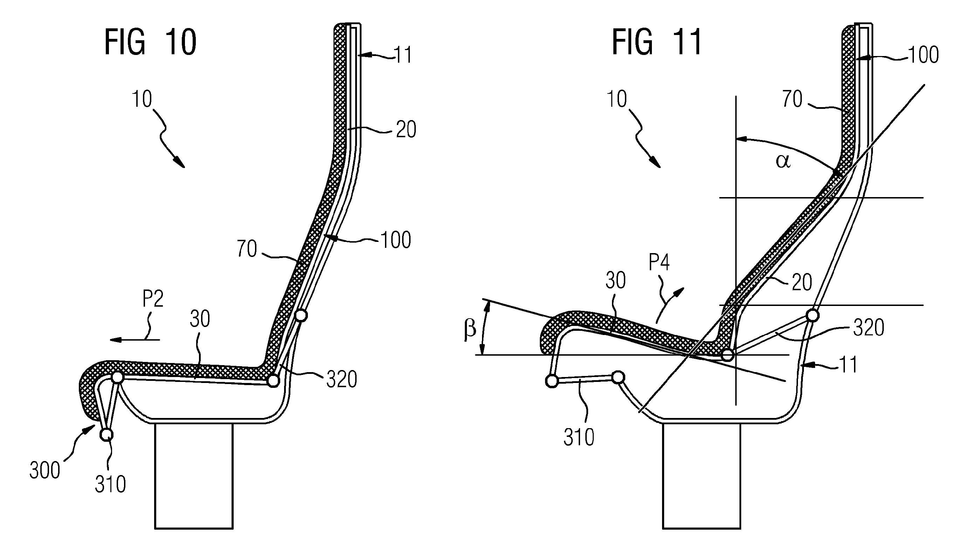

Die Figur 10 zeigt ein weiteres Ausführungsbeispiel für einen verstellbaren Fahrzeugsitz 10, der mit einer einteiligen, deformierbaren sowie gelenkfreien Schale 100 ausgestattet ist. Der Fahrzeugsitz 10 weist - wie der Fahrzeugsitz 10 gemäß den Figuren 8 und 9 - eine Verstelleinrichtung 300 auf, die mit einem Hebel 310 ausgestattet ist. Im Unterschied zu dem Fahrzeugsitz 10 gemäß den Figuren 8 und 9 ist die Verstelleinrichtung 300 gemäß Figur 10 mit einem weiteren Hebel 320 ausgestattet, der mit dem Hebel 310 zusammenwirkt.

Die beiden Hebel 310 und 320 bewirken, dass ein Verschieben der Sitzfläche 30 entlang der Pfeilrichtung P2 nach vorn zu einem Verkippen der Sitzfläche 30 entlang der Pfeilrichtung P4 führt. Mit anderen Worten wird bei dem Ausführungsbeispiel gemäß Figur 10 im Rahmen der Verstellung des Fahrzeugsitzes 10 von der Normalstellung in die Ruhestellung nicht nur eine horizontale Verschiebung des Sitzabschnitts 30 hervorgerufen, sondern darüber hinaus auch eine Verkippung des Sitzabschnitts 30. Der Kippwinkel, um den die Sitzfläche 30 verkippt wird, ist in der Figur 11 mit dem Bezugszeichen β gekennzeichnet.

Bei dem Ausführungsbeispiel gemäß den Figuren 10 und 11 erfolgt neben einem Verschieben und Verkippen des Sitzabschnitts 30 auch eine Deformation des Rückenlehnenabschnitts 20 aufgrund der Deformierbarkeit der einteiligen Schale 100, wie dies bereits im Zusammenhang mit den Figuren 1 bis 9 erläutert worden ist.

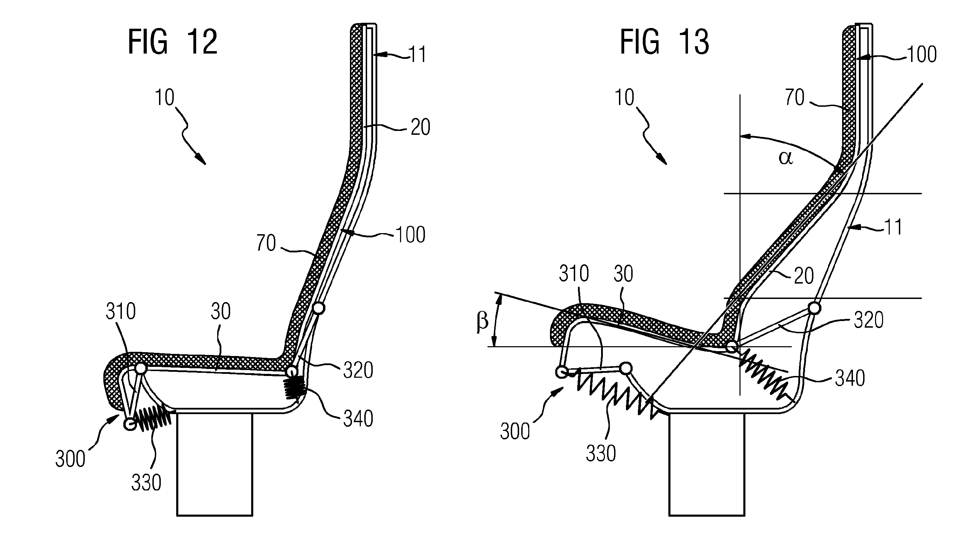

Die Figur 12 zeigt ein weiteres Ausführungsbeispiel für einen Fahrzeugsitz 10, der mit einer deformierbaren, gelenkfreien und einteiligen Sitzschale 100 ausgestattet ist. Im Unterschied zu dem Ausführungsbeispiel gemäß den Figuren 10 und 11 ist die Verstelleinrichtung 300 nicht nur mit einem Hebel 310 sowie einem weiteren Hebel 320 ausgestattet, sondern darüber hinaus auch mit zwei Federn 330 und 340, von denen die Feder 330 mit dem Hebel 310 und die Feder 340 mit dem weiteren Hebel 320 zusammenwirkt. Die beiden Federn 330 und 340 vereinfachen ein Verstellen des Fahrzeugsitzes 10 von der in der Figur 12 dargestellten Normalstellung in die in der Figur 13 dargestellte Ruhestellung. Zur Verstellung des Fahrzeugsitzes 10 von der Normalstellung gemäß Figur 12 muss lediglich der Sitzabschnitt 30 entlang der Pfeilrichtung P2 nach vorne geschoben werden (z. B. durch ein Abstützen der Fersen auf dem Fußboden), wodurch - unterstützt durch die Federkräfte der beiden Federn 330 und 340 - nachfolgend die beiden Hebel 310 und 320 ein Verkippen des Sitzabschnitts 30 und eine Deformation des Rückenlehnenabschnitts 20 bewirken. Mit anderen Worten dienen die Federn 330 und 340 also dazu, ein Verstellen des Fahrzeugsitzes zu vereinfachen, indem die zum Umstellen erforderlichen Kräfte mittels der Federkräfte der beiden Federn 330 und 340 reduziert werden.

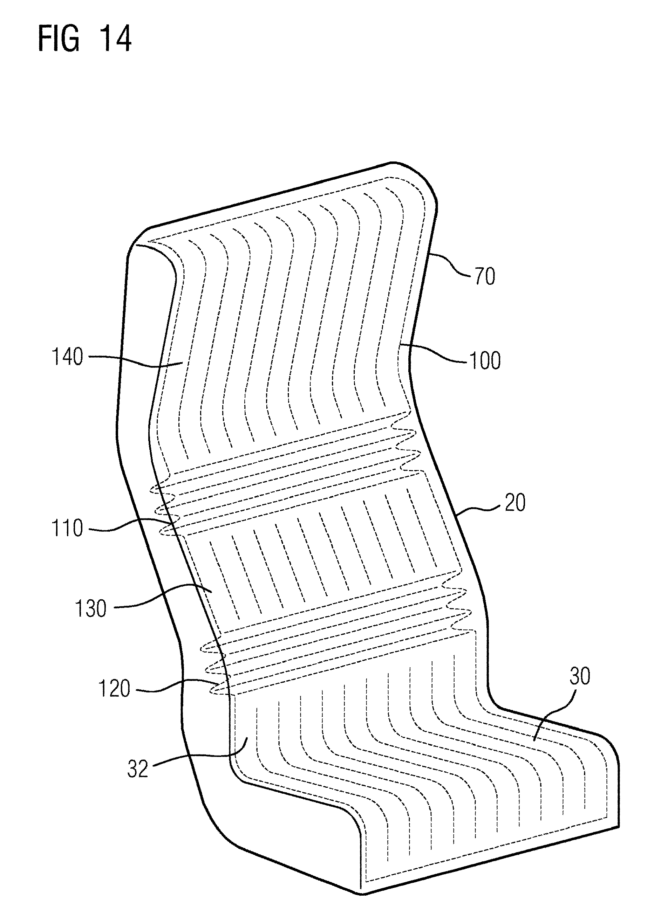

Die Figur 14 zeigt die in der Figur 5 gezeigte einteilige Schale 100, nachdem ein Polster 70 darauf aufgebracht worden ist. Es lässt sich erkennen, dass beim Verstellen des Fahrzeugsitzes 10 keine Druckstellen oder Falten im Polster 70 hervorgerufen werden können, da wegen der Deformierbarkeit der Schale 100 weder Kanten noch Spalte auftreten.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verstellbarer Fahrzeugsitz (10), insbesondere Schienenfahrzeugsitz, mit einem Sitzabschnitt (30) und einem Rückenlehnenabschnitt (20),
**dadurch gekennzeichnet, dass**
der Fahrzeugsitz (10) eine einteilige Schale (100) aufweist, die lokal unterschiedlich steif ist und durch Deformation unterschiedliche Konturen annehmen kann.

2. Verstellbarer Fahrzeugsitz (10) nach Anspruch 1,
**dadurch gekennzeichnet, dass**
die einteilige Schale (100) zumindest den Rückenlehnenabschnitt (20) des Fahrzeugsitzes (10) bildet.

3. Verstellbarer Fahrzeugsitz (10) nach Anspruch 2,
**dadurch gekennzeichnet, dass**
die einteilige Schale (100) den Rückenlehnenabschnitt (20) und den Sitzabschnitt (30) des Fahrzeugsitzes (10) bildet.

4. Verstellbarer Fahrzeugsitz (10) nach einem der voranstehenden Ansprüche,
**dadurch gekennzeichnet, dass**
die einteilige Schale (100) gelenkfrei ist.

5. Verstellbarer Fahrzeugsitz (10) nach einem der voranstehenden Ansprüche,
**dadurch gekennzeichnet, dass**
die Schale (100) zumindest zwei Teilabschnitte (110, 120) aufweist, die durch einen dazwischen liegenden, weniger steifen oder andersartig steifen Teilabschnitt (130) voneinander getrennt sind.

6. Verstellbarer Fahrzeugsitz (10) nach einem der voranstehenden Ansprüche,
**dadurch gekennzeichnet, dass**
die Schale (100) aus einem Stahlblech, insbesondere tiefgezogenem Stahlblech, besteht.

7. Verstellbarer Fahrzeugsitz (10) nach einem der voranstehenden Ansprüche,
**dadurch gekennzeichnet, dass**
die Schale (100) aus faserverstärktem, insbesondere glasfaserverstärktem, Kunststoff besteht.

8. Verstellbarer Fahrzeugsitz (10) nach einem der voranstehenden Ansprüche,
**dadurch gekennzeichnet, dass**
die Steifigkeitsverteilung in der Schale (100) zumindest auch auf einer lokalen Verringerung der Steifigkeit durch Löcher oder Aussparungen in der Schale (100) beruht.

9. Verstellbarer Fahrzeugsitz (10) nach einem der voranstehenden Ansprüche,
**dadurch gekennzeichnet, dass**
die Steifigkeitsverteilung in der Schale (100) zumindest auch auf Sicken (200, 210) beruht.

10. Verstellbarer Fahrzeugsitz (10) nach einem der voranstehenden Ansprüche,
**dadurch gekennzeichnet, dass**
die Steifigkeitsverteilung in der Schale (10) zumindest auch auf lokal unterschiedlichen Materialeigenschaften beruht.

11. Verstellbarer Fahrzeugsitz (10) nach einem der voranstehenden Ansprüche,
**dadurch gekennzeichnet, dass**
der Fahrzeugsitz (10) eine mit der Schale (100) mechanisch verbundene Sitzverstelleinrichtung (300) aufweist, die bei einer Betätigung die Schale (100) deformiert.

12. Verstellbarer Fahrzeugsitz (10) nach einem der voranstehenden Ansprüche,
**dadurch gekennzeichnet, dass**
die Verstelleinrichtung (300) im Falle einer Betätigung eine Verstellung der Neigung und/oder Kontur und/oder Position des Sitzabschnitts (30) und eine Verstellung der Neigung und/oder Kontur des Rückenlehnenabschnitts (20) hervorruft.

13. Schienenfahrzeug mit zumindest einem im Passagierbereich angeordneten Fahrzeugsitz (10) nach einem der voranstehenden Ansprüche.

14. Verfahren zum Herstellen eines Fahrzeugsitzes (10), insbesondere Schienenfahrzeugsitzes, mit einem Sitzabschnitt (30) und einem Rückenlehnenabschnitt (20),
**dadurch gekennzeichnet, dass**
der Sitzabschnitt (30) und/oder der Rückenlehnenabschnitt (20) des Fahrzeugsitzes (10) durch eine einteilige Schale (100) gebildet werden, die lokal unterschiedlich steif ist und durch Deformation unterschiedliche Konturen annehmen kann.

15. Verfahren nach Anspruch 14,
**dadurch gekennzeichnet, dass**
eine vorgegebene Steifigkeitsverteilung in der Schale (100) durch zumindest eine der folgenden Schritte erzeugt wird:
- Einbringen von Löchern oder Aussparungen in der Schale (100) zur lokalen Verringerung der Steifigkeit,
- Einstellen lokal unterschiedlicher Faserorientierung und/oder Einstellen eines lokal unterschiedlichen Faservolumenanteils im Falle eines Faserverbundwerkstoffes der Schale,
- Einbringen von Sicken (200, 210) in der Schale.
